# EUROPEAN PATENT SPECIFICATION

(11) **EP 0 513 939 B1**
(45) Date of publication and mention of the grant of the patent: **03.02.1999**
(21) Application number: 92202349.4
(22) Date of filing: 30.10.1987
(51) Int. Cl.: A01B 49/06

(54) **A soil working implement**
Bodenbearbeitungsgerät
Machine pour le travail du sol

(30) Priority: 04.11.1986 NL 8602785; 03.02.1987 NL 8700254; 25.02.1987 NL 8700466
(43) Date of publication of application: 19.11.1992
(62) Divisional of application: 87202100.1
(73) Proprietor: C. van der Lely N.V., 3155 PD Maasland (NL)
(72) Inventor: van der Lely, Ary, NL-3155 PD Maasland (NL); Bom, Cornelis Johannes Gerardus, NL-3181 VC Rozenburg (NL)
(74) Representative: Corten, Maurice Jean F.M.

(56) References cited:
- DE-A- 3 543 691
- DE-U- 8 529 225
- FR-A- 2 499 817
- FR-A- 2 526 626
- FR-A- 2 560 480

## Description

The invention relates to a soil working implement for the preparation of a seed bed, as set out in the preamble of the mainclaim.

Such a machine is known from FR-A-2 499 817. During operation the seed pipes, usually fitted with coulters, pass through the soil for depositing seed therein. Particularly at head land turning, the frame part of the machine is raised in order to facilitate the turning of the machine without any part, in particular the seed pipes, being in contact with the soil. Particularly the seed pipes may otherwise be bent or otherwise distorted. However, according to the invention, in many cases, still the height of the seed pipes above soil level is insufficient to prevent distortion of the seed pipes. This is for instance the case of encountering irregularities in the field. The rear wheels of the tractor carrying the machine may pass a furrow or pit in the field, whereby the vertical distance between the machine and the soil may be lowered substantially. Possible contact between the soil working members or the roller and the soil will usually simply cause the soil to be displaced. However, seed pipes generally are of a light construction and may distort at such contact, particularly when a turning movement is being carried out by the tractor. The known machine provides a solution for such phenomena in a machine combination of a conventional mechanical seed drill and a rotary harrow. Both the carrier beam for the seed pipes and the container of the known machine are, according to said solution, tilted forwardly as a whole, so that the seed pipes swivel upwardly and so that the center of gravity of the seed drill is brought closer towards the tractor and the machine combination may be lifted, even when the container is filled. According to the present invention a more favourable solution is achieved in a construction having the features of the characterizing part of claim 1.

With reference to the earlier German Offenlegungsschrift DE 35 43 691 disclosing a frame beam for seed pipes with a double row of beams, applicant has voluntarily limited the scope of the present application and has submitted separate claims for Germany.

The above-mentioned problem is also encountered if the said frame part is hingeably connected to a mainframe, which mainframe is connected to the lifting hitch of a tractor. Therefore, the invention also relates to the above-mentioned soil working implement in which a mainframe is provided, to the rear of which mainframe the frame part is connected, movably in height relative to said mainframe, in particular by means of a hinged parallelogram construction.

For a better understanding of the invention and to show how the same may be carried into effect, reference will now be made, by way of example, to the accompanying drawings, in which:
Figure 1 is a schematical plan view of a soil cultivating machine according to the invention, which machine comprises two mutually transport-foldable carriers for the soil working members and is combined with an implement for introducing material into the soil, in particular a seed drill;
Figure 2 is a side view of the assembly shown in Figure 1;
Figure 3 is, to an enlarged scale, a view taken in the direction of the arrow III in Figure 1, showing, in a second embodiment of the machine, the support of the seed pipes of a seed drill, and
Figure 4 is a view taken in the direction of the arrow IV in Figure 3.

The implement shown in the drawings concerns a soil cultivating machine, in particular one for the preparation of a seed bed. The machine comprises a frame beam 1 which extends transversely to the direction of operative travel A and is located at least substantially horizontally. The frame beam 1 consists of three portions which are in alignment and are pivotably interconnected by means of pins 2 extending in the direction of operative travel A. The central portion is provided with a trestle 3 having a three-point connection for coupling to the three-point lifting hitch of a tractor. Between the outer portions and the trestle 3 there are provided hydraulical adjusting cylinders 4, by means of which said outer portions can be folded relative to said central portion about the pins 2. At the ends facing away from each other, the outer portions of the frame beam 1 are each provided with a ground wheel 5 which is adjustable in height by means of a threaded spindle. Furthermore, each of the outer portions of the frame beam 1 is provided near its end with a hinged parallelogram construction 7, by means of which a carrier 8 is arranged movably in height relative to the portions. Each parallelogram construction 7 comprises two arms, which are superposed and are pivotably mounted on an upwardly directed plate arranged at the upper side of a carrier 8. Each of the carriers 8, which are in alignment, supports at least substantially vertical shafts of soil working members 12, which shafts are interspaced equidistantly at preferably 25 cms.

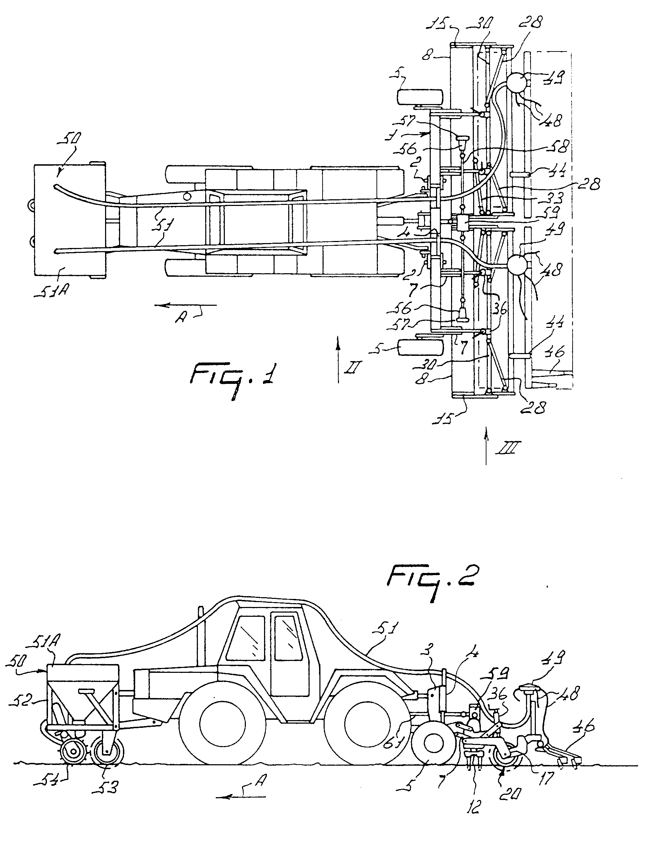

The end of each of the respective carriers 8 is closed by means of an upwardly directed plate 15 extending at least substantially parallel to a vertical plane in the direction of operative travel A of the machine. Near its front side, each of the plates 15 is provided with a pin extending transversely to the direction of operative travel A, the arrangement being such that the pins are in alignment. About each pin there is freely pivotable an arm 17, which arm extends rearwardly along the outer side of the plate 15. Each arm 17 has a front portion which extends at least substantially horizontally and merges into a portion 19 extending obliquely downwardly and rearwardly. Between the ends of the portions 19 there is arranged freely rotatably a roller 20 by means of shafts 21 supported in bearing housings. In this embodiment, the roller 20 is designed as a packer roller with scraper members 24. Each of the scraper members 24 is provided at a lower end of an obliquely upwardly and rearwardly extending arm 25. The arms 25 are mounted together on a carrier or beam 26, which extends at least substantially parallel to the axis of rotation of the roller 20. The carrier 26 is arranged near the upper ends of hook-shaped arms 27 which, by means of their other, forwardly directed ends, are freely rotatable about the shafts 21 of the roller 20. By means of a pair of lugs and a pin extending in the direction of operative travel A, there is arranged between the arms 17 an end of a cross beam or carrier 30, which beam extends at least substantially parallel to the axis of rotation of the roller 20. The cross beam 30 together with the arms 17 constitutes a carrier construction for the roller 20. At the front portions of the arms 17, which during operation are located at the facing ends of the rollers 20, there is arranged movably in front of the cross beam 30 an end of a stabilizer rod 33 (Figure 1) by means of a lug and a pin. The other end of the stabilizer rod 33 is arranged movably about a vertical pin provided near the centre at the rear side of a carrier 8. The length of the stabilizer rod 33 is adjustable.

The front portions of the arms 17 are each provided with a guide means, which are located at the inner sides and co-operate with the rear sides of the plates 15. By means of a horizontal pin, mounted to the carrier 30 and extending transversely to the direction of operative travel A, there is arranged freely movably a threaded spindle 36, which spindle is also connected to a carrier 8. By means of the spindle 36 the working depth of a carrier 8 relative to a roller can be adjusted. The upper end of each hook-shaped arm 27 is provided with a rod 28 which is arranged movably by means of a pin. The other end of the rod 28 is mounted near the threaded spindle 36 on the cross beam 30 by means of a pin (Figure 1). The length of the rod 28 is adjustable.

On each carrier 26 for the scraper members 24 of a roller 20 there are arranged at equal distance from the ends rearwardly extending brackets 44, on which is mounted a carrier beam 45 which extends transversely to the direction of operative travel A and over the entire width of the roller 20 (Figure 1). The carrier beam 45 is located at least substantially parallel to the carrier 26. On the carrier beam 45 there are arranged side by side seed pipes 46, which at their lower ends are provided with sowing shoes. Seen transversely to the direction of operative travel A of the machine, the sowing shoes are arranged in staggered relationship relative to each other and are provided at the rear side with resilient tines. By means of a flexible tube 48, each of the seed pipes 46 is connected to a distributing mechanism 49 of a pneumatical seed drill 50. As is apparent from Figure 1, seen in the direction of operative travel A of the machine, the distributing mechanisms 49 are mounted on each of the two rightmost brackets 44. By means of a supply tube 51 which near the upper side of the trestle 3 is supported on the frame beam 1 and which furthermore, when the machine is coupled, is passed to the front over the top side of the tractor, each of the distributing mechanisms 49 is connected to a fan and a container 51A. The container 51A and the fan are mounted on a frame 52 arranged at the lifting hitch at the front side of the tractor. During operation, the frame 52 is supported by a roller 53 which extends transversely to the direction of operative travel A and may be designed as a packer roller. The fan may be driven from the power take-off shaft at the front side of the tractor, while a supply mechanism for the supply of seed material from the container is driven by means of a wheel 54 rolling over the ground.

Within each of the carriers 8 there is mounted on the shafts of the respective soil working members 12 a pinion, the arrangement being such that the pinions on the shafts of adjacent soil working members are in driving connection with each other. Near the centre, the shaft of a soil working member 12 is extended and reaches by means of this extension to into a gear box 56. Inside the gear box 56, the extension is in driving connection via a bevel gear transmission with a shaft which extends transversely to the direction of operative travel A and is bearing-supported therein, which shaft is in driving connection via a speed variator 57 located at the outer side of the gear box with a shaft which also extends transversely to the direction of operative travel A and projects beyond the gear box at the other side. By means of telescopic shafts 58 provided with universal joints, the relevant shafts are connected to the ends of a shaft which also extends transversely to the direction of operative travel A and is bearing-supported in a gear box 59 mounted on a bracket located at the rear side of the central portion of the frame beam 1. Inside the gear box 59, the shaft extending transversely to the direction of operative travel A is in driving connection via a bevel gear transmission with a shaft which extends in the direction of operative travel A and projects beyond the gear box both at the front side and at the rear side. The end of the shaft projecting at the front side is connected to the power take-off shaft of the tractor by means of an intermediate shaft 61. The construction described in the foregoing operates as follows.

During operation of the above-described combination, the implement is coupled to the three-point lifting hitch of the tractor by means of the trestle 3 and from the power take-off shaft via the intermediate shaft 61 and the above-described transmission there is obtained such a drive for the soil working members 12 that adjacent soil working members are rotated in opposite directions and thereby cultivate by means of their soil working elements at least adjoining strips of soil.

During operation, the respective frame portions of the frame beam assume a fixed position relative to each other by means of a locking means (not shown in further detail). Upon movement in the direction of the arrow A, the machine rests on the ground by means of the height-adjustable ground wheels 5. With the aid of the spindle 36 and the rollers 20 located behind the soil working members 12, which rollers, as stated above, each are designed as a packer roller, it is possible to set the working depth of the soil working members 12 prior to starting the job. This setting can be effected by means of the adjusting devices provided on the cross beam 30 and constituted by the threaded spindles 36, which adjusting devices are movably connected to the rear side of a carrier 8 by means of connecting strips constituting a guide for a carrier 8.

The distributing mechanisms 49 and the seed pipes 46 of the seed drill 50 are mounted on a carrier 26 which is supported by means of the hook-shaped arms 27 which is freely movable about the shafts 21 of the packer rollers 20. In this connection, the free movability is limited by means of the rods 28. Upon a change in the working depth of the soil working members 12, it is possible to effect an after-setting of the seed pipes 46 and the scraper members 24. During a movement of a carrier 8 upwardly, this movement is also passed through the parallelogram constructions 7 at the front side. In this manner there is obtained a movement in upward direction, while there is hardly any change in the position of the soil working members nor in the working. In order to bring the machine in a transport position, it is possible to fix the parallelogram constructions 7 by means of a pin.

During operation, with the aid of the fan provided at the front side of the tractor there is conveyed seed material supplied from the container 51A, having e.g. a supplying mechanism that is driven by the ground wheel 54 rolling over the ground, via the pipes 51 towards the respective distributing mechanisms 49, whereafter via the flexible tubes 48 and the seed pipes 46 it is introduced into the freshly cultivated soil by means of the sowing shoes. With the aid of the above-described implement it is possible to cultivate in one operating run in an effective manner a comparatively wide (approximately 6 ms) strips of soil and to sow same at the same time. As stated above, for the purpose of transportation it is possible to insert the locking pin for the parallelogram constructions 7. Then, after the assembly has been lifted over some distance, the outer frame portions of the frame beam 1 can be folded about the pins 2 extending in the direction of operative travel A by means of the hydraulical adjusting cylinders 4. In doing so, the respective distributing mechanisms 49 are positioned side by side, so that they do not constitute an impediment to a compactly folded position. The frame 52 provided at the front side of the tractor can be lifted by means of a separate lifting hitch, so that the whole can be transported.

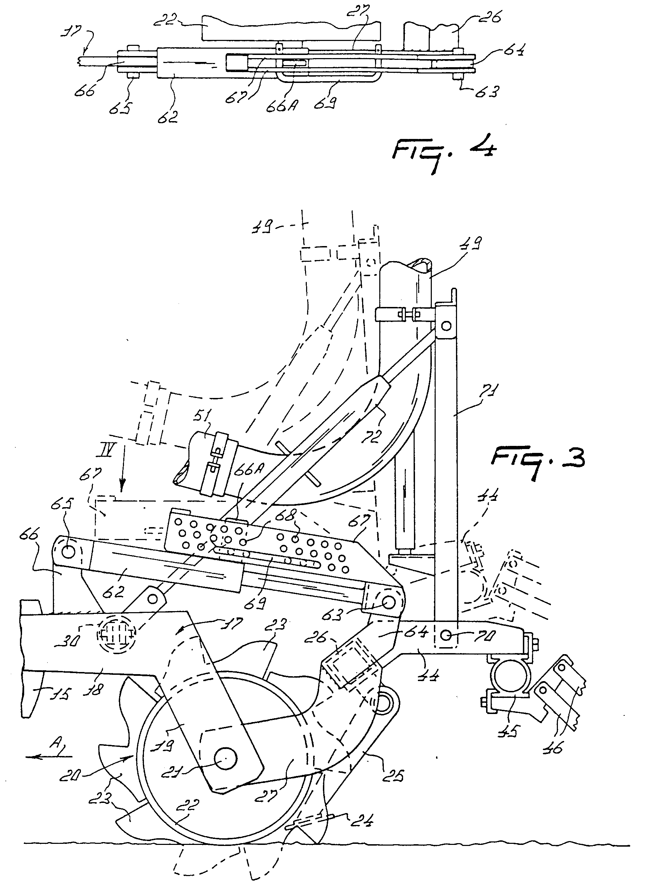

Figures 3 and 4 illustrate an embodiment wherein there is arranged an adjusting cylinder 62 instead of the rods 28 between the carrier or beam 26 for the scrapers and the arm 17 constituting part of the carrier construction for the roller 20.

In this connection, at the side of the carrier 26 there is arranged pivotably at an upwardly extending lug 64 the piston rod of the adjusting cylinder 62 by means of a fork-like portion and a pin 63. The housing of said adjusting cylinder is arranged pivotably at an upwardly extending lug 66 on the upper side of the arm 17 by means of a pin 65. The upper side of said housing of the adjusting cylinder 62 includes a stop 66A located between two plate-shaped portions 67, which portions are attached to the end of the piston rod. In two places, the plate-shaped portions are provided with three rows of superjacent apertures 68. Into said apertures 68 may be inserted the legs of a brace 69, which legs can be secured by means of a split pin (Figure 4). The legs of the brace 69 serve as stops for co-operation with the stops 66A, the arrangement being such that hereby the stroke of the adjusting cylinder 62 can be limited.

In this embodiment, the distributing mechanisms 49 are arranged pivotably relative to the bracket 44 by means of a transverse shaft 70 extending at least substantially in the horizontal direction. Between the upper side of a support 71 for the distributing mechanism 49 and the cross beam 30 there is provided an adjusting rod 72, the ends of which are arranged pivotably to the support 71 and the cross beam 30, respectively. By means of said adjusting rod 72 forming adjusting means it can be ensured that, during operation, the distributing mechanism 49 assumes an at least substantially vertical position, which is of importance for a proper distribution of the seed material to be introduced into the soil. Besides, prior to the machine being brought into a transport position in the above-described manner, the distributing mechanism 49 can be pivoted rearwardly about the shaft 70 located at the lower side by means of said adjusting rod 72, so that, when the outer frame portions of the frame beam 1 are folded upwardly, the distributing mechanisms do not contact other machine parts. With the aid of the adjusting cylinders 62 forming adjusting members and being provided between the carrier or beam 26 and the arms 17, upon turning at the head of the field the carrier 26 can be pivoted about the shafts 21 of the roller 20, as a result of which said carrier with the brackets 44 and the seed pipes arrives into the position as indicated by dash lines (Figure 6). In doing so, this pivotal movement is limited by the rear leg of the brace 69. The lifting of the implement during turning at the head of the field prevents the seed pipes from being distorted and/or clogged with soil. The front leg of the brace 69 ensures that, when the implement is brought into the working position again, the carrier 26 is returned to the same position as before, so that the same sowing depth can be maintained. It is also possible to change the sowing depth by means of the brace 69, i.e. by removing the front leg thereof further towards the rear an increase in sowing depth will be obtained.

## Claims (Claims for the following Contracting State(s): AT, FR, GB, NL)

1. A soil working machine for the preparation of a seedbed comprising a rotary harrow and a seed-drill including a seed container (51A) and seed pipes (46) for drilling seed into the prepared seedbed, the machine further comprising a frame part (8) supporting a plurality of adjacent soil working members (12), the frame part (8) being at least partly supported by a roller (20), the roller (8) being located at the rear of the said frame part (8) and being connected pivotably thereto by means of a carrier construction (17); the seed pipes (46) being supported by a transverse carrier beam (45) and being arranged adjustable in height relative to said carrier construction (17), characterized in that the seed container (51A) is supported in a further frame (52) independently of said seed pipes (46), and in that means (62) are provided for moving said seed pipes (46) into or out of an operating position independently of the position of said seed container (51A).

2. A soil working machine as claimed in claim 1, characterized in that flexible tubes (48) extend between a seed distributing part (49) of the machine and the seed pipes (46).

3. A soil working machine as claimed in claim 1 or 2, characterized in that the seed drill is a pneumatic seed drill provided with a distributor part (49) arranged simultaneously movable together with said seed pipes (46).

4. A soil working machine as claimed in claim 1, 2 or 3, characterized in that the further frame (52) is provided with means for coupling to a separate lifting hitch of a tractor for operating the machine.

5. A soil working machine as claimed in one of the preceding claims, characterized in that a mainframe (1) is provided, to the rear of which the frame part (8) comprising the soil working members (12) is connected movably in height relative to said mainframe (1), in particular by means of a hinged parallelogram construction (7).

6. A soil working machine as claimed in one of the preceding claims, characterized in that the pivotal movement of the carrier (45) for the seed pipes is limited by means of a stop (66A).

7. A soil working machine as claimed in claim 6, characterized in that the stop (66A) is located adjacent and movable relative to and alongside a perforated plate (67), through the holes of which a pin, counteracting the stop (66A) is applied.

8. A soil working machine as claimed in one of the two preceding claims, characterized in that the hydraulic ram comprises a cylindrical part and a piston rod, the stop (66A) being connected to the one of said parts of the hydraulic ram (62) and the perforated plate to the other said part.

9. A soil working machine as claimed in one of the three preceding claims, characterized in that the stop (66A) is movable between the legs of a brace (69) applied through the apertures (68) of the perforated plate (67).

## Claims (Claims for the following Contracting State(s): DE)

1. A soil working machine for the preparation of a seedbed comprising a rotary harrow and a seed-drill including a seed container (51A) and seed pipes (46) for drilling seed into the prepared seedbed, the machine further comprising a frame part (8) supporting a plurality of adjacent soil working members (12), the frame part (8) being at least partly supported by a roller (20), the roller (8) being located at the rear of the said frame part (8) and being connected pivotably thereto by means of a carrier construction (17); the seed pipes (46) being supported by a transverse carrier beam (45) and being arranged adjustable in height relative to said carrier construction (17), characterized in that the carrier beam (45) is a single transverse beam (45) and in that the seed container (51A) is supported in a further frame (52) independently of said seed pipes (46), and in that means (62) are provided for moving said seed pipes (46) into or out of a working/operational position independently of the position of said seed container (51A).

2. A soil working machine as claimed in claim 1, characterized in that flexible tubes (48) extend between a seed distributing part (49) of the machine and the seed pipes (46).

3. A soil working machine as claimed in claim 1 or 2, characterized in that the seed drill is a pneumatic seed drill provided with a distributor part (49) arranged simultaneously movable together with said seed pipes (46).

4. A soil working machine as claimed in claim 1, 2 or 3, characterized in that the further frame (52) is provided with means for coupling to a separate lifting hitch of a tractor for operating the machine.

5. A soil working machine as claimed in one of the preceding claims, characterized in that a mainframe (1) is provided, to the rear of which the frame part (8) comprising the soil working members (12) is connected movably in height relative to said mainframe (1), in particular by means of a hinged parallelogram construction (7).

6. A soil working machine as claimed in one of the preceding claims, characterized in that the pivotal movement of the carrier (45) for the seed pipes is limited by means of a stop (66A).

7. A soil working machine as claimed in claim 6, characterized in that the stop (66A) is located adjacent and movable relative to and alongside a perforated plate (67), through the holes of which a pin, counteracting the stop (66A) is applied.

8. A soil working machine as claimed in one of the two preceding claims, characterized in that the hydraulic ram comprises a cylindrical part and a piston rod, the stop (66A) being connected to the one of said parts of the hydraulic ram (62) and the perforated plate to the other said part.

9. A soil working machine as claimed in one of the three preceding claims, characterized in that the stop (66A) is movable between the legs of a brace (69) applied through the apertures (68) of the perforated plate (67).

## Patentansprüche (Patentansprüche für folgende(n) Vertragsstaat(en): AT, FR, GB, NL)

1. Bodenbearbeitungsmaschine zur Bereitung eines Saatbettes, die eine Kreiselegge und eine Drillmaschine mit einem Saatgutbehälter (51A) und Särohren (46) zum Einbringen von Saatgut in das vorbereitete Saatbett aufweist, wobei die Maschine ferner einen mehrere nebeneinander angeordnete Bodenbearbeitungsglieder (12) tragenden Gestellteil (8) aufweist, der zumindest teilweise durch eine Walze (20) abgestützt ist, die an der Rückseite des Gestellteiles (8) angeordnet und mit diesem mittels eines Traggestelles (17) schwenkbar verbunden ist; wobei die Särohre (46) von einem sich in Querrichtung erstreckenden Tragbalken (45) abgestützt und in bezug auf das Traggestell (17) höhenverstellbar angeordnet sind,
dadurch gekennzeichnet, dass der Saatgutbehälter (51A) unabhängig von den Särohren (46) in einem weiteren Gestell (52) abgestützt ist, und dass eine Vorrichtung (62) vorhanden ist, um die Särohre (46) unabhängig von der Position des Saatgutbehälters (51A) in eine Arbeits-/Betriebslage oder aus ihr heraus zu bewegen.

2. Bodenbearbeitungsmaschine nach Anspruch 1,
dadurch gekennzeichnet, dass zwischen einem Saatgutverteiler (49) der Maschine und den Särohren (46) Schläuche (48) angeordnet sind.

3. Bodenbearbeitungsmaschine nach Anspruch 1 oder 2,
dadurch gekennzeichnet, daß die Drillmaschine eine pneumatische Drillmaschine mit einem Verteiler (49) ist, der gemeinsam mit den Särohren (46) bewegbar ist.

4. Bodenbearbeitungsmaschine nach Anspruch 1, 2 oder 3,
dadurch gekennzeichnet, daß das weitere Gestell (52) Vorrichtungen aufweist, mittels derer es zum Betrieb der Maschine an eine separate Hebevorrichtung eines Schleppers anzuschließen ist.

5. Bodenbearbeitungsmaschine nach einem der vorhergehenden Ansprüche,
dadurch gekennzeichnet, daß ein Hauptgestell (1) vorhanden ist, an dessen Rückseite der Gestellteil (8) mit den Bodenbearbeitungsgliedern (12) in bezug auf das Hauptgestell (1) höhenbewegbar angeordnet ist, insbesondere mittels eines Gelenkparallelogrammgestänges (7).

6. Bodenbearbeitungsmaschine nach einem der vorhergehenden Ansprüche,
dadurch gekennzeichnet, daß die schwenkbewegung des Trägers (45) für die Särohre durch einen Anschlag (66A) begrenzt ist.

7. Bodenbearbeitungsmaschine nach Anspruch 6,
dadurch gekennzeichnet, daß der Anschlag (66A) an und entlang einer perforierten Platte (67) bewegbar angeordnet ist, in deren Öffnungen ein mit dem Anschlag (66A) zusammenwirkender Gegenanschlag eingesetzt ist.

8. Bodenbearbeitungsmaschine nach einem der beiden vorhergehenden Ansprüche,
dadurch gekennzeichnet, daß der hydraulische Arbeitszylinder einen zylindrischen Teil und eine Kolbenstange aufweist, wobei der Anschlag (66A) mit dem einen und die perforierte Platte mit dem anderen Teil des hydraulischen Arbeitszylinders (62) verbunden ist.

9. Bodenbearbeitungsmaschine nach einem der drei vorhergehenden Ansprüche,
dadurch gekennzeichnet, daß der Anschlag (66A) zwischen den Schenkeln eines Bügels (69) bewegbar ist, die in die Öffnungen (68) der perforierten Platte (67) eingesteckt sind.

## Patentansprüche (Patentansprüche für folgende(n) Vertragsstaat(en): DE)

1. Bodenbearbeitungsmaschine zur Bereitung eines Saatbettes, die eine Kreiselegge und eine Drillmaschine mit einem Saatgutbehälter (51A) und Särohren (46) zum Einbringen von Saatgut in das vorbereitete Saatbett aufweist, wobei die Maschine ferner einen mehrere nebeneinander angeordnete Bodenbearbeitungsglieder (12) tragenden Gestellteil (8) aufweist, der zumindest teilweise durch eine Walze (20) abgestützt ist, die an der Rückseite des Gestellteiles (8) angeordnet und mit diesem mittels eines Traggestelles (17) schwenkbar verbunden ist; wobei die Särohre (46) von einem sich in Querrichtung erstreckenden Tragbalken (45) abgestützt und in bezug auf das Traggestell (17) höhenverstellbar angeordnet sind,
dadurch gekennzeichnet, dass der Tragbalken (45) durch einen eizelnen Querbalken (45) gebildet ist, dass der Saatgutbehälter (51A) unabhängig von den Särohren (46) in einem weiteren Gestell (52) abgestützt ist, und dass eine Vorrichtung (62) vorhanden ist, um die Särohre (46) unabhängig von der Position des Saatgutbehälters (51A) in eine Arbeits-/Betriebslage oder aus ihr heraus zu bewegen.

2. Bodenbearbeitungsmaschine nach Anspruch 1,
dadurch gekennzeichnet, dass zwischen einem Saatgutverteiler (49) der Maschine und den Särohren (46) Schläuche (48) angeordnet sind.

3. Bodenbearbeitungsmaschine nach Anspruch 1 oder 2,
dadurch gekennzeichnet, daß die Drillmaschine eine pneumatische Drillmaschine mit einem Verteiler (49) ist, der gemeinsam mit den Särohren (46) bewegbar ist.

4. Bodenbearbeitungsmaschine nach Anspruch 1, 2 oder 3,
dadurch gekennzeichnet, daß das weitere Gestell (52) Vorrichtungen aufweist, mittels derer es zum Betrieb der Maschine an eine separate Hebevorrichtung eines Schleppers anzuschließen ist.

5. Bodenbearbeitungsmaschine nach einem der vorhergehenden Ansprüche,
dadurch gekennzeichnet, daß ein Hauptgestell (1) vorhanden ist, an dessen Rückseite der Gestellteil (8) mit den Bodenbearbeitungsgliedern (12) in bezug auf das Hauptgestell (1) höhenbewegbar angeordnet ist, insbesondere mittels eines Gelenkparallelogrammgestänges (7).

6. Bodenbearbeitungsmaschine nach einem der vorhergehenden Ansprüche,
dadurch gekennzeichnet, daß die Schwenkbewegung des Trägers (45) für die Särohre durch einen Anschlag (66A) begrenzt ist.

7. Bodenbearbeitungsmaschine nach Anspruch 6,
dadurch gekennzeichnet, daß der Anschlag (66A) an und entlang einer perforierten Platte (67) bewegbar angeordnet ist, in deren Öffnungen ein mit dem Anschlag (66A) zusammenwirkender Gegenanschlag eingesetzt ist.

8. Bodenbearbeitungsmaschine nach einem der beiden vorhergehenden Ansprüche,
dadurch gekennzeichnet, daß der hydraulische Arbeitszylinder einen zylindrischen Teil und eine Kolbenstange aufweist, wobei der Anschlag (66A) mit dem einen und die perforierte Platte mit dem anderen Teil des hydraulischen Arbeitszylinders (62) verbunden ist.

9. Bodenbearbeitungsmaschine nach einem der drei vorhergehenden Ansprüche,
dadurch gekennzeichnet, daß der Anschlag (66A) zwischen den Schenkeln eines Bügels (69) bewegbar ist, die in die Öffnungen (68) der perforierten Platte (67) eingesteckt sind.

## Revendications (Revendications pour l'(les) Etat(s) contractant(s) suivant(s): AT, FR, GB, NL)

1. Machine de travail du sol, pour la préparation d'un lit de semis, comprenant une herse rotative et un semoir comportant une trémie (51 A) contenant la semence et des tuyaux à semence (46) pour semer la semence dans le lit de semis préparé, la machine comprenant en outre une partie de châssis (8) supportant une pluralité d'organes de travail du sol (12) adjacents, la partie de châssis (8) étant au moins partiellement supportée par un rouleau (20), le rouleau (20) étant situé à l'arrière de ladite partie de châssis (8) et étant relié à celle-ci de manière pivotante au moyen d'une structure porteuse (17); les tuyaux à semence (46) étant supportés par une poutre porteuse transversale (45) et étant disposés de manière réglable en hauteur par rapport à ladite structure porteuse (17), caractérisée en ce que la trémie (51 A) contenant la semence est supportée dans un autre châssis (52) indépendamment desdits tuyaux à semence (46), et en ce que des moyens (62) sont prévus pour déplacer lesdits tuyaux à semence (46) pour les amener en position de travail ou les en retirer, indépendamment de la position de ladite trémie (51 A) contenant la semence.

2. Machine de travail du sol selon la revendication 1, caractérisée en ce que des tubes flexibles (48) s'étendent entre un organe distributeur (49) de semence de la machine et les tuyaux à semence (46).

3. Machine de travail du sol selon la revendication 1 ou 2, caractérisée en ce que le semoir est un semoir pneumatique muni d'un organe distributeur (49) agencé de manière à être mobile simultanément avec lesdits tuyaux à semence (46).

4. Machine de travail du sol selon la revendication 1, 2 ou 3, caractérisée en ce que l'autre châssis (52) est muni de moyens de couplage avec un dispositif d'attelage-levage séparé d'un tracteur pour faire fonctionner la machine.

5. Machine de travail du sol selon l'une des revendications précédentes, caractérisée en ce qu'un châssis principal (1) est prévu, à l'arrière duquel la partie de châssis (8) comprenant les organes de travail du sol (12) est reliée en étant mobile en hauteur par rapport audit châssis principal (1), en particulier au moyen d'une structure articulée en parallélogramme (7).

6. Machine de travail du sol selon une des revendications précédentes, caractérisée en ce que le mouvement de pivotement de l'élément porteur (45) des tuyaux à semence est limité au moyen d'une butée (66 A).

7. Machine de travail du sol selon la revendication 6, caractérisée en ce que la butée (66 A) est située adjacente à une plaque perforée (67) et mobile par rapport à celle-ci, et le long de celle-ci, dans les trous de laquelle est appliquée une goupille s'opposant à l'action de la butée (66 A).

8. Machine de travail du sol selon l'une des deux revendications précédentes, caractérisée en ce que le vérin hydraulique comprend une partie cylindrique et une tige de piston, la butée (66 A) étant reliée à une desdites parties du vérin hydraulique (62) et la plaque perforée à l'autre desdites parties.

9. Machine de travail du sol selon l'une des trois revendications précédentes, caractérisée en ce que la butée (66 A) est mobile entre les branches d'un étrier (69) appliqué dans les ouvertures (68) de la plaque perforée (67).

## Revendications (Revendications pour l'(les) Etat(s) contractant(s) suivant(s): DE)

1. Machine de travail du sol, pour la préparation d'un lit de semis, comprenant une herse rotative et un semoir comportant une trémie (51 A) contenant la semence et des tuyaux à semence (46) pour semer la semence dans le lit de semis préparé, la machine comprenant en outre une partie de châssis (8) supportant une pluralité d'organes de travail du sol (12) adjacents, la partie de châssis (8) étant au moins partiellement supportée par un rouleau (20), le rouleau (20) étant situé à l'arrière de ladite partie de châssis (8) et étant relié à celle-ci de manière pivotante au moyen d'une structure porteuse (17); les tuyaux à semence (46) étant supportés par une poutre porteuse transversale (45) et étant disposés de manière réglable en hauteur par rapport à ladite structure porteuse (17), caractérisée en ce que la poutre porteuse (45) est une poutre transversale simple (45) et que la trémie (51 A) contenant la semence est supportée dans un autre châssis (52) indépendamment desdits tuyaux à semence (46), et en ce que des moyens (62) sont prévus pour déplacer lesdits tuyaux à semence (46) pour les amener en position de travail ou les en retirer, indépendamment de la position de ladite trémie (51 A) contenant la semence.

2. Machine de travail du sol selon la revendication 1, caractérisée en ce que des tubes flexibles (48) s'étendent entre un organe distributeur (49) de semence de la machine et les tuyaux à semence (46).

3. Machine de travail du sol selon la revendication 1 ou 2, caractérisée en ce que le semoir est un semoir pneumatique muni d'un organe distributeur (49) agencé de manière à être mobile simultanément avec lesdits tuyaux à semence (46).

4. Machine de travail du sol selon la revendication 1, 2 ou 3, caractérisée en ce que l'autre châssis (52) est muni de moyens de couplage avec un dispositif d'attelage-levage séparé d'un tracteur pour faire fonctionner la machine.

5. Machine de travail du sol selon l'une des revendications précédentes, caractérisée en ce qu'un châssis principal (1) est prévu, à l'arrière duquel la partie de châssis (8) comprenant les organes de travail du sol (12) est reliée en étant mobile en hauteur par rapport audit châssis principal (1), en particulier au moyen d'une structure articulée en parallélogramme (7).

6. Machine de travail du sol selon une des revendications précédentes, caractérisée en ce que le mouvement de pivotement de l'élément porteur (45) des tuyaux à semence est limité au moyen d'une butée (66 A).

7. Machine de travail du sol selon la revendication 6, caractérisée en ce que la butée (66 A) est située adjacente à une plaque perforée (67) et mobile par rapport à celle-ci, et le long de celle-ci, dans les trous de laquelle est appliquée une goupille s'opposant à l'action de la butée (66 A).

8. Machine de travail du sol selon l'une des deux revendications précédentes, caractérisée en ce que le vérin hydraulique comprend une partie cylindrique et une tige de piston, la butée (66 A) étant reliée à une desdites parties du vérin hydraulique (62) et la plaque perforée à l'autre desdites parties.

9. Machine de travail du sol selon l'une des trois revendications précédentes, caractérisée en ce que la butée (66 A) est mobile entre les branches d'un étrier (69) appliqué dans les ouvertures (68) de la plaque perforée (67).
